# DEMANDE DE BREVET EUROPEEN

(11) **EP 1 764 494 A1**
(43) Date de publication de la demande: **21.03.2007**
(21) Numéro de dépôt: 06120941.7
(22) Date de dépôt: 20.09.2006
(51) Int. Cl.: F02C 6/16

(54) **Installation de stockage et de récupération d'énergie électrique**

(30) Priorité: 20.09.2005 FR 0552822
(71) Demandeur: Benaros, Pierre, 06110 Le Cannet (FR)
(72) Inventeur: Benaros, Pierre, 06110 Le Cannet (FR)
(74) Mandataire: Decobert, Jean-Pascal

(57) **Abrégé**

L'installation de stockage et de récupération d'énergie électrique comprend au moins un compresseur d'air (8) entraîné en rotation par un moteur électrique alimenté par le réseau électrique (1) pour mettre sous pression un réservoir de stockage (3) d'air comprimé. L'installation comprend des moyens pour commander l'alimentation du moteur électrique d'entraînement du compresseur d'air (8) lors des périodes de surproduction d'énergie électrique et des moyens pour commander l'entraînement d'une génératrice par de l'air sous pression prélevé sur le réservoir de stockage (3). L'installation comprend en outre des panneaux solaires (4) adaptés pour chauffer de l'eau qui est stockée dans un ballon d'eau chaude (5) relié par des conduites à un échangeur (6) disposé dans le réservoir de stockage (3) pour augmenter la pression de l'air de ce réservoir (3) par échange thermique entre l'eau chaude et l'air du réservoir (3).

## Description

La présente invention concerne une installation de stockage et de récupération d'énergie électrique.

On sait que la demande d'énergie électrique fluctue considérablement au cours d'une année, ce qui se traduit par une forte variation du prix de l'électricité.

Il est de ce fait extrêmement intéressant de pouvoir stocker l'énergie lorsque le prix de l'électricité est bas et de restituer l'énergie stockée, lorsque le prix de l'électricité est élevé.

On connaît selon le FR-A-2.285.012, une installation de stockage et de récupération d'énergie électrique comprenant un compresseur d'air entraîné en rotation par un moteur électrique alimenté par le réseau électrique pour mettre sous pression un réservoir de stockage d'air comprimé.

Cette installation comprend d'autre part, des moyens pour entraîner en rotation une génératrice par de l'air sous pression prélevé dans le réservoir de stockage pour produire de l'énergie électrique qui peut être restituée au réseau électrique.

Cependant, cette installation connue présente un rendement extrêmement faible, en raison notamment des pertes d'énergie thermique des compresseurs.

Le document WO-A-2005/041326 préconise l'emploi de panneaux solaires pour chauffer de l'air comprimé stocké dans un réservoir. Les panneaux solaires sont directement en liaison avec le volume interne du réservoir. Cela ne permet pas de réunir l'énergie thermique d'origine solaire avec d'éventuelles autres sources de réchauffage de l'air stocké, par exemple l'énergie issue de la biomasse ou celle récupérable lors du fonctionnement de la machine.

L'implantation proposée par ce document est par ailleurs très simpliste et surtout adaptée à des réservoirs de petites tailles. La liaison directe proposée entre les panneaux solaires et le réservoir est très difficilement concevable par exemple si le réservoir est fort éloigné.

Le but de la présente invention est d'apporter des perfectionnements aux installations de stockage et de récupération d'énergie du type cité ci-dessus pour remédier à leur faible rendement.

Suivant l'invention, l'installation de stockage et de récupération d'énergie électrique, comprenant au moins un compresseur d'air entraîné en rotation par un moteur électrique alimenté par le réseau électrique pour mettre sous pression un réservoir de stockage d'air comprimé, des moyens pour entraîner en rotation une génératrice par de l'air sous pression prélevé du réservoir de stockage, pour produire de l'énergie électrique qui est restituée au réseau électrique, comprend des moyens pour commander l'alimentation du moteur électrique d'entraînement du compresseur d'air lors des périodes de surproduction d'énergie électrique et des moyens pour commander l'entraînement de la génératrice par de l'air sous pression prélevé sur le réservoir de stockage lors des périodes de demande d'énergie électrique. L'installation comprend en outre des panneaux solaires adaptés pour chauffer de l'eau qui est stockée dans un ballon d'eau chaude relié par des conduites à un échangeur disposé dans le réservoir de stockage pour augmenter la pression de l'air de ce réservoir par échange thermique entre l'eau chaude et l'air du réservoir.

L'eau chaude chauffée gratuitement par l'énergie solaire permet par échange thermique d'augmenter la pression de l'air comprimé du réservoir et donc d'accroître l'énergie stockée dans celui-ci.

On compense ainsi la perte thermique du compresseur.

L'emploi d'un ballon d'eau chaude permet de constituer une certaine inertie thermique et rend possible, avantageusement, la collecte de calories depuis plusieurs sources (solaire, biomasse, pertes de chaleur des compresseurs ou des turbines ...) et ce de façon simple et unitaire. On combat ainsi un préjugé qui tendrait plutôt à relier directement les panneaux solaires au réservoir d'air.

L'installation devient alors rentable, du fait qu'elle permet de stocker de l'énergie en faisant fonctionner le compresseur, lors des périodes où l'électricité est à bas prix et en restituant l'énergie stockée lors des périodes où l'électricité est plus chère.

Dans une version particulière de l'invention, les moyens pour entraîner en rotation la génératrice comprennent au moins une turbine alimentée par l'air comprimé prélevé du réservoir de stockage.

Ces moyens constituent un premier moyen de conversion de l'énergie stockée en énergie électrique.

Dans une version préférée de l'invention, le compresseur d'air coopère avec un échangeur pour récupérer l'énergie thermique produite lors du fonctionnement dudit compresseur et la restituer à l'eau chaude provenant du ballon d'eau chaude et transformer cette eau en vapeur, un compresseur à vapeur alimenté par cette vapeur étant relié au réservoir de stockage pour augmenter la pression de l'air de ce réservoir.

On utilise ainsi les pertes thermiques du compresseur pour accroître la quantité d'énergie stockée.

Dans une autre version particulière de l'invention, l'installation comprend un dispositif d'entraînement d'une génératrice produisant de l'énergie électrique qui est restituée au réseau, comprenant au moins une chaîne enroulée sur deux roues, portant une série de récipients en forme d'obus disposés dans un volume d'eau, ces récipients pouvant être, de façon cyclique, remplis d'air sous pression prélevé sur le réservoir de stockage et remplis par de l'eau prélevée dans le volume d'eau, pour permettre un déplacement continu desdits récipients et un entraînement en rotation de la génératrice.

Un dispositif d'entraînement a été décrit dans le GB 2 350 159A. Dans l'application considérée par l'invention, un tel dispositif permet également de convertir l'énergie stockée sous forme d'air comprimé, en énergie électrique. Un tel dispositif peut être utilisé indépendamment du premier moyen de conversion constitué par la turbine accouplée avec la génératrice, ou en combinaison avec ce premier moyen.

De préférence, l'installation comprend plusieurs compresseurs disposés sur un arbre commun entraîné par un moteur électrique, les compresseurs étant reliés entre eux par des circuits d'air comportant chacun un échangeur en relation d'échange thermique avec l'eau chaude d'un ballon, chauffée par des panneaux solaires.

Cette disposition permet de récupérer encore davantage l'énergie thermique des compresseurs pour la convertir en énergie stockée dans le réservoir de stockage.

De préférence également, ledit ballon est un second ballon distinct du ballon renfermant de l'eau chaude qui est en relation d'échange thermique avec l'échangeur disposé dans le réservoir de stockage d'air comprimé, l'eau chaude dudit second ballon étant chauffée à une température de l'ordre de 70°C par une seconde série de panneaux solaires.

Selon d'autres particularités avantageuses de l'invention :
- l'eau chaude provenant dudit second ballon est transformée en vapeur par échange thermique avec les échangeurs disposés sur les circuits d'air reliant les compresseurs et avec une pompe à chaleur.
- la vapeur est envoyée par une conduite dans une turbine à vapeur entraînant un compresseur adapté pour envoyer de l'air comprimé dans ledit réservoir de stockage.
- la vapeur condensée sortant à une température de l'ordre de 90°C de la turbine est recyclée vers ledit second ballon d'eau chaude.

D'autres particularités et avantages de l'invention apparaîtront encore tout au long de la description ci-après.

Aux dessins annexés, donnés à titre d'exemples, non limitatifs :
- la figure 1 est un schéma d'ensemble de l'installation de stockage et de récupération d'énergie selon l'invention,
- la figure 2 est un schéma plus détaillé de l'installation,
- la figure 3 est une vue latérale d'une série de chaînes d'entraînement de récipients en forme d'obus et du générateur associé,
- la figure 4 est une vue en plan de l'une des chaînes représentées sur la figure 3,
- la figure 5 est une vue schématique d'un groupe de turbines pneumatiques entraînant une génératrice de récupération d'énergie et d'échangeur en relation d'échange thermique avec un ballon d'eau chaude,
- la figure 6 est un schéma du groupe de compresseurs permettant la mise sous pression du réservoir de stockage d'air comprimé selon une version préférée de l'invention.

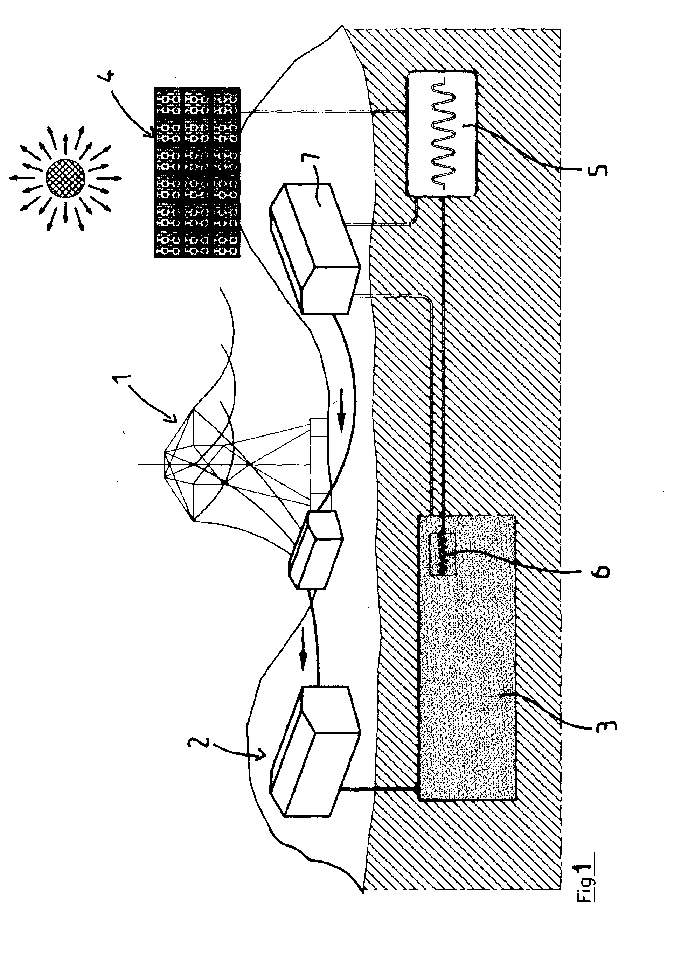

La figure 1 représente une installation de stockage et de récupération d'énergie qui comprend le réseau électrique 1, un groupe de compression 2 pour envoyer de l'air sous pression dans un réservoir de stockage souterrain 3, des panneaux solaires 4 pour chauffer de l'eau circulant dans un ballon d'eau chaude 5 qui est en relation d'échange thermique avec un échangeur 6 disposé dans le réservoir de stockage 3 et une usine 7 qui récupère de l'énergie pour la restituer sous forme d'énergie électrique au réseau 1.

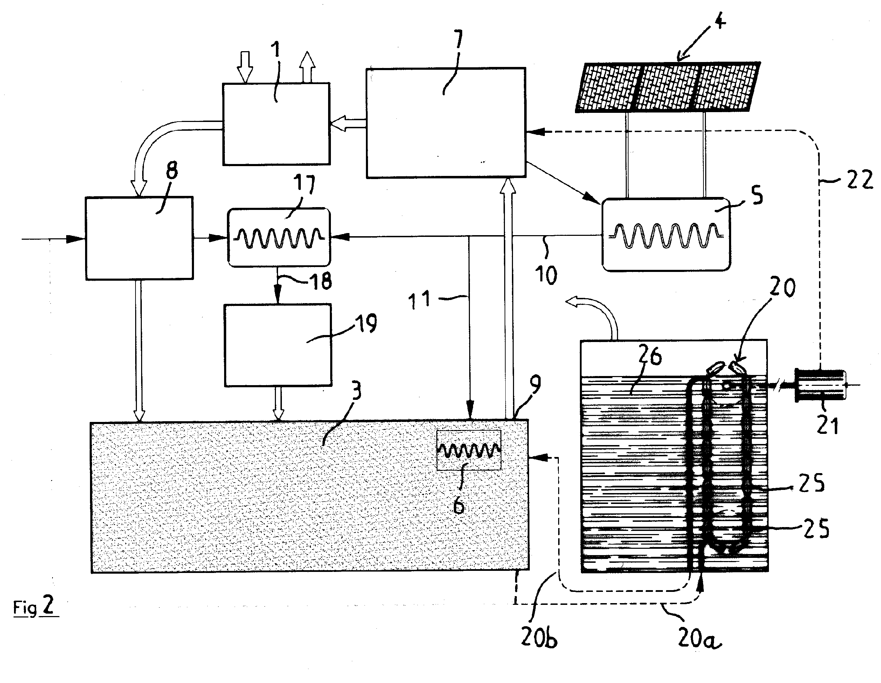

Le schéma de la figure 2 montre plus en détail que l'installation de stockage et de récupération d'énergie électrique comprend au moins un compresseur d'air 8 entraîné en rotation par un moteur électrique alimenté par le réseau électrique 1 pour mettre sous pression le réservoir de stockage d'air comprimé 3, des moyens pour entraîner en rotation une génératrice située dans l'usine 7 par de l'air sous pression prélevé en 9 dans le réservoir de stockage 3, pour produire de l'énergie électrique qui est restituée au réseau électrique 1.

Conformément à l'invention, l'installation comprend des moyens pour commander l'alimentation du moteur électrique d'entraînement du compresseur d'air 8 lors des périodes de surproduction d'énergie électrique et des moyens pour commander l'entraînement de la génératrice située dans l'usine 7 par de l'air sous pression prélevé dans le réservoir de stockage 3 lors des périodes de demande d'énergie électrique. L'installation comprend en outre des panneaux solaires 4 adaptés pour chauffer de l'eau qui est stockée dans un ballon d'eau chaude 5 relié par des conduites 10, 11 à l'échangeur disposé dans le réservoir de stockage 3 pour augmenter la pression de l'air de ce réservoir par échange thermique entre l'eau chaude provenant du ballon 5 et l'air comprimé du réservoir 3.

Le réservoir de stockage 3 d'air comprimé est de préférence enterré à une profondeur par exemple de 10 m.

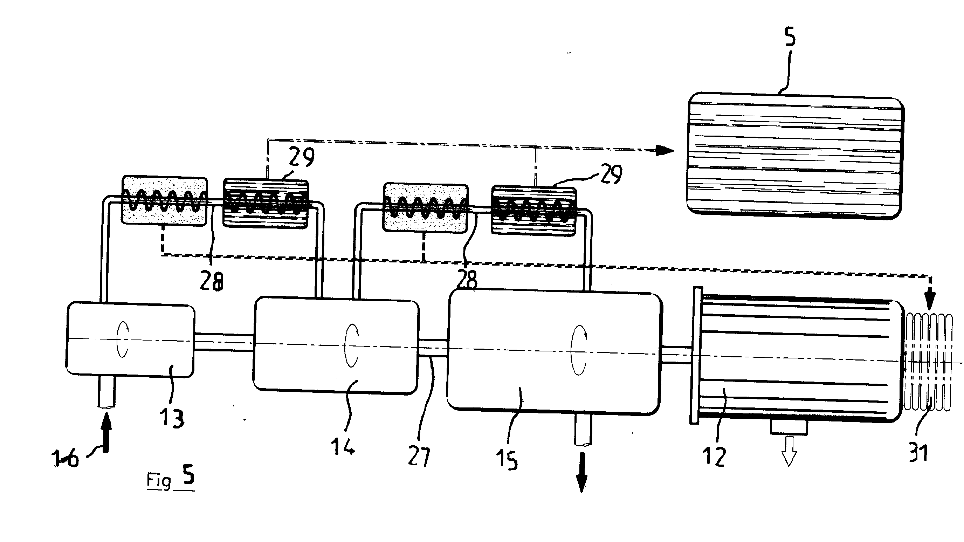

Comme montré par la figure 5, les moyens pour entraîner en rotation la génératrice 12 située dans l'usine 7 comprennent plusieurs turbines pneumatiques 13, 14 ,15 alimentées par l'air comprimé 16 prélevé dans le réservoir de stockage 3.

Par ailleurs, la figure 2 montre que le compresseur d'air 8 coopère avec un échangeur 17 pour récupérer l'énergie thermique produite lors du fonctionnement dudit compresseur 8 et la restituer à l'eau chaude provenant du ballon d'eau chaude 5 et transformer cette eau en vapeur 18. Un compresseur à vapeur 19 alimenté par cette vapeur 18 est relié au réservoir de stockage 3 pour augmenter la température et de ce fait, la pression de l'air de ce réservoir. La pression régnant dans le réservoir 3 est de l'ordre de 130 bar.

L'eau chaude contenue dans le ballon 5 est chauffée par les panneaux solaires 4 à une température de l'ordre de 90°C.

Par ailleurs, la vapeur d'eau 18 sort de l'échangeur 17 à une température de l'ordre de 120°C.

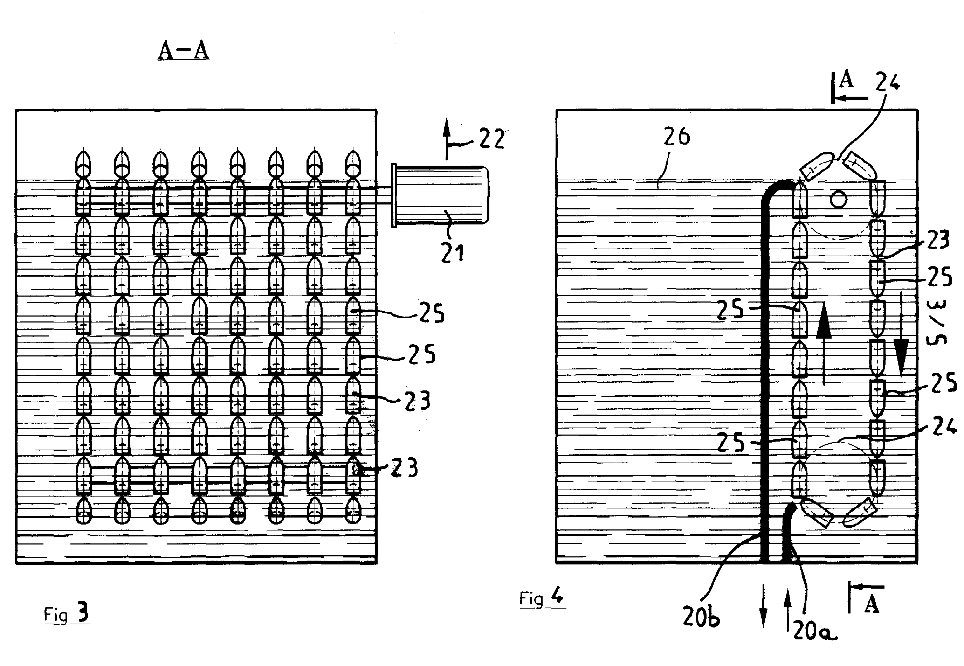

Dans l'exemple représenté sur la figure 2, l'installation comprend un dispositif d'entraînement 20 d'une génératrice 21 produisant de l'énergie électrique 22 qui est restituée au réseau 1, comprenant (voir également les figures 3 et 4) plusieurs chaînes 23 enroulées sur deux roues 24, portant une série de récipients 25 en forme d'obus disposés dans un volume d'eau 26. Ces récipients 26 peuvent être de façon cyclique remplis d'air sous pression prélevé sur le réservoir de stockage 3 et remplis par de l'eau prélevée dans le volume d'eau 26, pour permettre un déplacement continu desdits récipients et un entraînement en rotation de la génératrice 21.

Le dispositif 20 représenté sur les figures 2, 3 et 4 fonctionne de la façon suivante.

Dans un premier temps, à la partie inférieure du dispositif 20, de l'air est introduit par la conduite 20a au sommet d'un obus 25. L'eau est expulsée de l'obus, ce qui le soumet à une poussée qui l'entraîne vers le haut s'additionnant à la poussée d' Archimède. Cet effet est répété pour les obus 25 suivants.

Dans un deuxième temps, lorsqu'un obus 25 arrive en haut du dispositif 20, un clapet s'ouvre au sommet de l'obus et est recyclé vers le réservoir 30 par la conduite 20b. Les obus 25 se remplissent d'eau successivement lors de leur descente dans le volume d'eau 26.

Ainsi, l'installation représentée sur la figure 2 comprend plusieurs moyens qui se combinent ensemble pour accroître l'énergie stockée dans le réservoir 3 sous forme d'air comprimé :
- d'une part le compresseur 8 qui est entraîné par de l'énergie électrique prélevée sur le réseau lorsque celui-ci est en période de surproduction c'est-à-dire lorsque le coût de l'électricité est bas ;
- d'autre part les panneaux solaires 4 qui chauffent l'eau par une énergie gratuite et la restituent au réservoir 3 en augmentant la pression de l'air ;
- enfin l'échangeur 17 qui récupère l'énergie thermique du compresseur et la restitue au réservoir 3 en augmentant encore davantage, la pression de l'air, c'est-à-dire en accroissant l'énergie stockée dans ce réservoir.

Par ailleurs, l'installation comporte deux moyens qui se combinent pour convertir l'énergie stockée dans le réservoir 3 en énergie électrique :
- d'une part les turbines 13, 14, 15 qui entraînent le générateur 12 de l'usine 7,
- d'autre part le dispositif d'entraînement 20 qui entraîne en rotation la génératrice 21.

Dans une version simplifiée, l'installation pourrait ne comporter que l'un des deux moyens ci-dessus. Ces deux moyens de conversion d'énergie pourraient d'ailleurs être mis en oeuvre indépendamment l'un de l'autre.

Dans l'exemple représenté sur la figure 5, l'installation comprend plusieurs turbines 13, 14, 15 disposées sur un arbre commun 27 pour entraîner en rotation la génératrice 12. La première turbine 13 est alimentée par de l'air comprimé 16 provenant du réservoir de stockage 3 et les turbines suivantes 14, 15 sont alimentées par l'air s'échappant de la turbine précédente.

De plus, le circuit d'air 28 reliant les turbines comprend des échangeurs 29, 30 en relation d'échange thermique avec l'eau chaude du ballon 5 et avec le radiateur 31 de la génératrice 12.

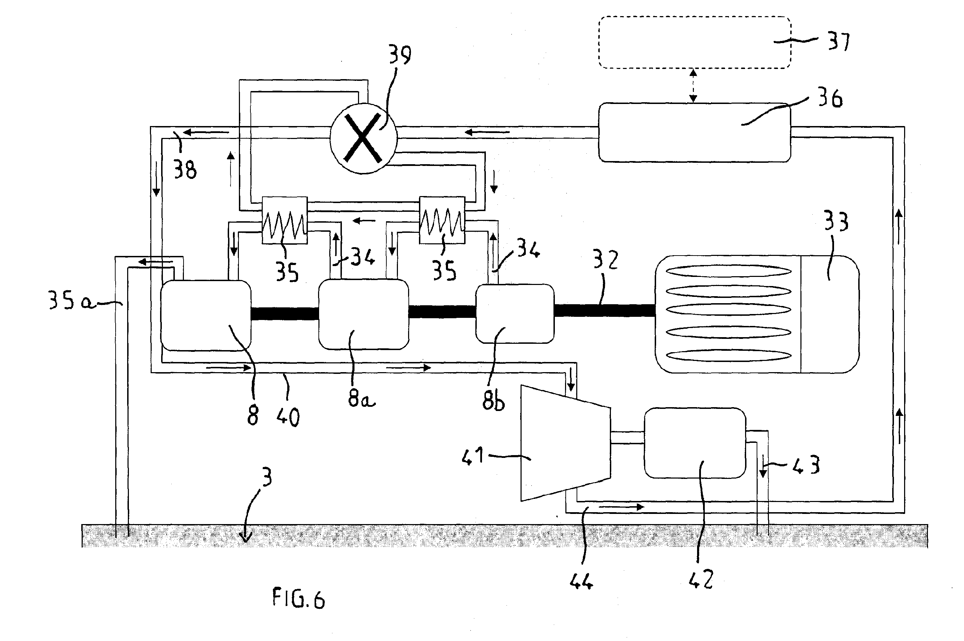

Dans l'exemple de la figure 6, l'installation comprend plusieurs compresseurs 8, 8a, 8b disposés sur un arbre commun 32 entraîné par un moteur électrique 33. Les compresseurs 8, 8a, 8b sont reliés entre eux par des circuits d'air 34 comportant chacun un échangeur 35 en relation d'échange thermique avec l'eau chaude d'un ballon 36, chauffée par des panneaux solaires 37.

Dans la pratique, les compresseurs 8, 8a et 8b sont en fait des étages de compression d'un même ensemble. La succession d'étages améliorent le rendement.

L'air comprimé 35a sortant du compresseur 8 est envoyé dans le réservoir 3.

Dans cet exemple, le ballon d'eau chaude 36 est un second ballon distinct du ballon 5 renfermant de l'eau chaude qui est en relation d'échange thermique avec l'échangeur 6 disposé dans le réservoir 3 de stockage d'air comprimé. L'eau chaude du second ballon est chauffée à une température de l'ordre de 70°C par une seconde série de panneaux solaires 37, différente de celle des panneaux 4.

L'eau chaude provenant du second ballon 36 est transformée en vapeur 38 par échange thermique avec les échangeurs 35 disposés sur les circuits d'air 34 reliant les compresseurs 8, 8a, 8b et avec une pompe à chaleur 39.

Comme montré par la figure 6, la vapeur 38 est envoyée par une conduite 40 dans une turbine à vapeur 41 entraînant un compresseur 42 adapté pour envoyer de l'air comprimé 43 dans le réservoir de stockage 3.

Par ailleurs, la vapeur condensée 44 sortant à une température de l'ordre de 90°C de la turbine 41 est recyclée vers le second ballon d'eau chaude 36.

Ainsi, la récupération de l'énergie est optimale.

Le rendement global de l'installation que l'on vient de décrire reste malgré les améliorations apportées relativement faible : 50 à 60%. Cependant, ce rendement apparemment faible est supérieur à ceux des dispositifs existant et largement compensé par le fait qu'il permet de stocker de l'énergie pendant des périodes où l'électricité est achetée à faible prix, cette énergie pouvant être restituée à tout moment sous forme d'électricité à prix plus élevé notamment pendant les périodes de forte demande.

A titre d'exemple non limitatif, une installation selon l'invention peut présenter les caractéristiques suivantes :
Volume du réservoir de stockage 3 : 25000 m³
Volume du ballon d'eau chaude 5 : 2000 m³
Volume du second ballon 36 : 1000 m³
Surface des panneaux solaires 4 : 25000 m³
Surface des panneaux solaires 37 : 15000 m³
Puissance de la génératrice 12 : 82 MWH
Puissance du moteur 33 d'entraînement des compresseurs : 26 MWH

### REFERENCES

- 1.: Réseau électrique
- 2.: Groupe de compression
- 3.: Réservoir de stockage souterrain
- 4.: Panneaux solaires
- 5.: Ballon d'eau chaude
- 6.: Echangeur
- 7.: Usine
- 8,: 8a, 8b. Compresseur d'air
- 9.: Sortie
- 10,11.: Conduites
- 12.: Génératrice
- 13,: 14, 15. Turbines pneumatiques
- 16.: Air comprimé
- 17.: Echangeur
- 18.: Vapeur
- 19.: Compresseur à vapeur
- 20.: Dispositif d'entraînement
- 20a.: Conduite
- 20b.: Réservoir
- 21.: Génératrice
- 22.: Energie électrique
- 23.: Chaînes
- 24.: Roues
- 25.: Récipients
- 26.: Volume d'eau
- 27.: Arbre commun
- 28.: Circuit d'air
- 29.: Echangeurs
- 30.: Réservoir
- 31.: Radiateur
- 32.: Arbre commun
- 33.: Moteur électrique
- 34.: Circuit d'air
- 35.: Echangeur
- 35a.: Air comprimé
- 36.: Ballon d'eau chaude
- 37.: Panneaux solaires
- 38.: Vapeur
- 39.: Pompe à chaleur
- 40.: Conduite
- 41.: Turbine
- 42.: Compresseur
- 43.: Air comprimé
- 44.: Vapeur condensée

## Revendications

1. Installation de stockage et de récupération d'énergie électrique comprenant au moins un compresseur d'air (8) entraîné en rotation par un moteur électrique alimenté par le réseau électrique (1) pour mettre sous pression un réservoir de stockage (3) d'air comprimé, des moyens pour entraîner en rotation une génératrice (12, 21) par de l'air sous pression prélevé du réservoir de stockage (3), pour produire de l'énergie électrique qui est restituée au réseau électrique (1), comprenant des moyens pour commander l'alimentation du moteur électrique d'entraînement du compresseur d'air (8) lors des périodes de surproduction d'énergie électrique et des moyens pour commander l'entraînement de la génératrice (12, 21) par de l'air sous pression prélevé sur le réservoir de stockage (3) lors des périodes de demande d'énergie électrique et en ce que l'installation comprenant en outre des panneaux solaires (4), **caractérisée par le fait que** les panneaux solaires (4) sont adaptés pour chauffer de l'eau qui est stockée dans un ballon d'eau chaude (5) relié par des conduites à un échangeur (6) disposé dans le réservoir de stockage (3) pour augmenter la pression de l'air de ce réservoir (3) par échange thermique entre l'eau chaude et l'air du réservoir (3).

2. Installation selon la revendication 1, **caractérisée en ce qu'**elle comprend plusieurs compresseurs (8, 8a, 8b) disposés sur un arbre commun (32) entraîné par un moteur électrique (33), les compresseurs étant reliés entre eux par des circuits d'air (34) comportant chacun un échangeur (35) en relation d'échange thermique avec l'eau chaude d'un ballon (36), chauffée par des panneaux solaires (37).

3. Installation selon la revendication 2, **caractérisée en ce que** ledit ballon (36) est un second ballon distinct du ballon (5) renfermant de l'eau chaude qui est en relation d'échange thermique avec l'échangeur (6) disposé dans le réservoir de stockage (3) d'air comprimé, l'eau chaude dudit second ballon (36) étant chauffée à une température de l'ordre de 70°C par une seconde série de panneaux solaires (37).

4. Installation selon la revendication 3, **caractérisée en ce que** l'eau chaude provenant dudit second ballon (36) est transformée en vapeur par échange thermique avec les échangeurs (35) disposés sur les circuits d'air (34) reliant les compresseurs (8, 8a, 8b) et avec une pompe à chaleur (39).

5. Installation selon la revendication 4, **caractérisée en ce que** la vapeur est envoyée par une conduite (40) dans une turbine à vapeur (41) entraînant un compresseur (42) adapté pour envoyer de l'air comprimé dans ledit réservoir de stockage (3).

6. Installation selon la revendication 5, **caractérisée en ce que** la vapeur condensée sortant à une température de l'ordre de 90°C de la turbine (41) est recyclée vers ledit second ballon d'eau chaude (36).

7. Installation selon l'une des revendications 2 à 6, **caractérisée en ce que** le réservoir de stockage (3) d'air comprimé est souterrain.

8. Installation selon l'une des revendications 2 à 7, **caractérisée en ce que** les moyens pour entraîner en rotation la génératrice (12) comprennent au moins une turbine (13) alimentée par l'air comprimé prélevé du réservoir de stockage (3).

9. Installation selon l'une des revendications 2 à 8, **caractérisée en ce que** l'eau chaude contenue dans le ballon (5) est chauffée par les panneaux solaires (4) à une température de l'ordre de 90°C.

10. Installation selon l'une des revendications 2 à 9, **caractérisée en ce qu'**elle comprend plusieurs turbines (13, 14, 15) disposées sur un arbre commun (27) pour entraîner en rotation la génératrice (12), la première turbine (13) étant alimentée par de l'air comprimé (16) provenant du réservoir de stockage (3) et les turbines suivantes (14, 15) étant alimentées par l'air s'échappant de la turbine précédente.

11. Installation selon la revendication 10, **caractérisée en ce que** le circuit d'air (28) reliant les turbines (13, 14, 15) comprend des échangeurs (29) en relation d'échange thermique avec l'eau chaude dudit ballon (5).

12. Installation selon l'une des revendications 2 à 11, **caractérisée en ce que** le compresseur d'air (8) coopère avec un échangeur (17) pour récupérer l'énergie thermique produite lors du fonctionnement dudit compresseur (8) et la restituer à l'eau chaude provenant du ballon d'eau chaude (5) et transformer cette eau en vapeur (18), un compresseur à vapeur (19) alimenté par cette vapeur étant relié au réservoir de stockage (3) pour augmenter la pression de l'air de ce réservoir.

13. Installation selon la revendication 12, **caractérisée en ce que** la vapeur d'eau produite est à une température de l'ordre de 120°C.

14. Installation selon l'une des revendications 2 à 13, **caractérisée en ce qu'**elle comprend un dispositif (20) d'entraînement d'une génératrice (21) produisant de l'énergie électrique qui est restituée au réseau (1), comprenant au moins une chaîne (23) enroulée sur deux roues (24), portant une série de récipients (25) en forme d'obus disposés dans un volume d'eau (26), ces récipients (25) pouvant être, de façon cyclique, remplis d'air sous pression prélevé sur le réservoir de stockage (3) et remplis par de l'eau prélevée dans le volume d'eau (26), pour permettre un déplacement continu desdits récipients (25) et un entraînement en rotation de la génératrice (21).
